# EUROPÄISCHE PATENTSCHRIFT

(11) **EP 1 234 389 B1**
(45) Veröffentlichungstag und Bekanntmachung des Hinweises auf die Patenterteilung: **03.01.2007**
(21) Anmeldenummer: 00989807.3
(22) Anmeldetag: 28.11.2000
(51) Int. Cl.: H04B 7/005

(54) **VERFAHREN ZUR SENDELEISTUNGSREGELUNG IN EINEM FUNK-KOMMUNIKATIONSSYSTEM**
METHOD FOR A TRANSMIT POWER CONTROL IN A RADIO COMMUNICATION SYSTEM
PROCEDE DE REGULATION DE PUISSANCE D'EMISSION DANS UN SYSTEME DE COMMUNICATION RADIO

(30) Priorität: 29.11.1999 DE 19957299
(43) Veröffentlichungstag der Anmeldung: 28.08.2002
(73) Patentinhaber: SIEMENS AKTIENGESELLSCHAFT, 80333 München (DE)
(72) Erfinder: ÖSTREICH, Stefan, 83607 Holzkirchen (DE); SOMMER, Volker, 13503 Berlin (DE)
(86) Internationale Anmeldenummer: PCT/DE2000/004224
(87) Internationale Veröffentlichungsnummer: WO 2001/041328

(56) Entgegenhaltungen:
- WO-A-97/27712
- US-A- 5 305 468
- US-A- 5 898 925

## Beschreibung

Die Erfindung betrifft ein Verfahren und eine Funkstation zur Sendeleistungsregelung in Funk-Kommunikationssystemen, insbesondere in Mobilfunksystemen mit einer TDD-Funkschnittstelle.

Ein Verfahren und eine Funkstation gemäß dem Oberbegriff der Ansprüche 1 bzw. 7 ist z.B. aus US-A-5 898 925 bekannt.

In Funk-Kommunikationssystemen werden Nachrichten (beispielsweise Sprache, Bildinformation oder andere Daten) als Signale mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Die Funk-Kommunikationssysteme der 3. Generation sollen ein als CDMA (Code Division Multiple Access) bekanntes Teilnehmer-Separierungsverfahren nutzen, bei dem eine Sendeleistungseinstellung nötig ist, um die Interferenz gering zu halten und Fadingeffekte bei der Empfangsleistung auszuregeln. Eine schnelle und genaue Sendeleistungseinstellung ist wünschenswert, setzt aber voraus, daß permanent sowohl gesendet als auch empfangen wird.

Bei einem aus IMT-2000 Study Committee, Air-Interface WG, SWG2, "Specifications of Air-Interface for 3G Mobile System", vom 18.11.1998, bekannten Modus von Funk-Kommunikationssystemen ist die Funkschnittstelle nach einem TDD-Übertragungsverfahren organisiert, dies bedeutet, ein Rahmen ist in Zeit-schlitze aufgeteilt und in einem Frequenzband sind Auf- und Abwärtsrichtung lediglich zeitlich getrennt. Es kann also in dem Frequenzband nur entweder empfangen oder gesendet werden. Damit entstehen bei der Sendeleistungseinstellung Fehler, die u.a. aus der Zeitverzögerung zwischen der Leistungsmessung und der Übertragung bzw. Umsetzung des entsprechenden Korrekturwertes entstehen.

In IMT-2000 Study Committee, Air-Interface WG, SWG2, "Specifications of Air-Interface for 3G Mobile System", vom 18.11.1998, S.152-154, wird vorgeschlagen, zusätzlich zu einer Regelungsschleife mit Korrekturwerten noch Messungen durchzuführen, die zusätzlich zur Sendeleistungseinstellung berücksichtigt werden. Dazu werden ein spezieller Kanal (Beacon Channel/BCCH) mit bekannter konstanter Sendeleistung ausgemessen und die Pfaddämpfung ermittelt (T_{BTS}-R_{MS}). Der spezielle Kanal ist jedoch nur in Abwärtsrichtung und in wenigen Zeitschlitzen verfügbar und kann deshalb nur beschränkt genutzt werden. Abwärtsrichtung bedeutet dabei, daß eine Verbindung (DL, Downlink) zur Übertragung eines Signals von einer Basisstation aus zu zumindest einer Teilnehmerstation hin gesendet wird.

Bei einem TDD-System (TDD: Time Division Duplex) kann sich die Datenübertragung zu einer Teilnehmerstation bzw. Anwendereinrichtung (UE, user equipment) in Form eines Kanals CCTrCH für kodierte zusammengesetzte Daten (CCTrCH: Coded Composite Transport CHannel) und mit einer Bündelung mehrerer Übertragungskanäle über mehrere Zeitschlitze erstrecken. Es gibt aber nur ein einziges Sendeleistungsregelungs-Kommando (transmit power control command) für alle Zeitschlitze zusammen, das von der Teilnehmerstation zu einer Basisstation bzw. einem sonstigen geeigneten Netzknoten gesendet wird.

Das bedeutet implizit, daß die Basisstation bei einer Sendung zu dieser Teilnehmerstation hin in allen Zeitschlitzen mit der gleichen Leistung sendet. Dies ist nachteilhaft, da die Interferenz I an der Teilnehmerstation in der Regel je nach Zeitschlitz unterschiedlich ist und sich somit in jedem Zeitschlitz k ein anderes Verhältnis von Signal zu Interferenz S/I(k) und somit eine andere Qualität ergibt.

Die innere Schleife der geschlossenen Leistungssteuerung (closed loop power control) vergleicht dabei das Signal/Interferenz-Verhältnis S/I(k) mit dem Soll-Signal/Interferenz-Verhältnis (SIR target) und generiert daraus eine Leistungssteuerungsanweisung TPC (power control command). Je nach Algorithmus kann sie sich am schlechtesten Fall, also einem "Worst-case-Szenario" orientieren, d. h. am Zeitschlitz mit dem schlechtesten Signal/Interferenz-Verhältnis S/I. Dabei wird in Kauf genommen, daß das Signal/Interferenz-Verhältnis in den übrigen Zeitschlitzen besser als der Sollwert ist und entsprechend Leistung vergeudet wird. Oder der Algorithmus nimmt einen Mittelwert für das Signal/Interferenz-Verhältnis mit allerdings der Gefahr, daß manche der Zeitschlitze ein sehr schlechtes Signal/Interferenz-Verhältnis haben und die in diesen übertragenen Daten nur schlecht empfangen werden.

Der Erfindung liegt die Aufgabe zugrunde, die Einstellung der Sendeleistung für insbesondere Abwärtsverbindungen weiter zu verbessern.

Diese Aufgabe wird durch das Verfahren zur zeitschlitzbasierten Abwärtsverbindungs-Leistungssteuerung und durch die Funkstation für ein Funk-Kommunikationssystem mit den Merkmalen der unabhängigen Ansprüche gelöst. Vorteilhafte Ausgestaltungen sind Gegenstand von abhängigen Ansprüchen.

Idealerweise kann durch ein solches Verfahren zur Sendeleistungseinstellung bzw. ein solches Funk-Kommunikationssystem mit entsprechenden Funkstationen, die über eine Funkschnittstelle nach einem TDD-Übertragungsverfahren miteinander kommunizieren, die Sendeleistung unter Verwendung von für sich bekannten Interferenzmessungen beim Empfänger bei zukünftigen Sendungen für jeden einzelnen Zeitschlitz individuell gesteuert werden, um so beim Empfänger in jedem Zeitschlitz individuell das möglichst selbe Signal/Interferenz-Verhältnis zu erzielen.

Besonders effektiv ist das Verfahren, wenn die Interferenzwerte eines jeden Zeitschlitzes, zu dem beim Empfänger ein Interferenzwert bestimmbar ist, direkt zur direkten Sendeleistungs-Nachstellung der sendenden Station übermittelt werden.

Ein Vergleich mehrerer aufeinanderfolgender Interferenzwerte ermöglicht eine zusätzliche Abschätzung und/oder Extrapolation zukünftiger optimaler Sendeleistungen bei sich z.B. kontinuierlich verschlechternder oder verbessernder Sendebedingung einer sich bewegenden Teilnehmerstation.

Die Umsetzung von bestimmten Interferenzwerten in spezielle Sendeleistungswerte ermöglicht eine Berechnung bei bereits einer empfangenden Teilnehmerstation oder bei einer zentralen Einrichtung des Kommunikationsnetzes und die erst darauf folgende Übermittlung an die sendende Basisstation.

Die Verwendung möglichst vieler Aussendungen ermöglicht eine gute Einstellung der Sendeleistung auch für den Fall, daß zwischen den miteinander kommunizierenden Stationen gerade keine aktive Verbindung für z.B. ein Gespräch besteht.

Durch die Bestimmung der Leistungsoffsetwerte in einer Abwärtsverbindung wird durch die Rückmeldung von Interferenzen beim Empfang eine geschlossene Schleife gebildet, die eine besonders schnelle Nachsteuerung bzw. Nachregelung der Sendeleistung ermöglicht.

Vorteilhafterweise umfaßt ein Funk-Kommunikationssystem zum Durchführen eines solchen Verfahrens zumindest eine Steuereinrichtung, die Korrekturwerte, die auf Interferenzmessungen einzelner Zeitschlitze beruhen, zur feinen und/oder schnellen Sendeleistungseinstellung berücksichtigen kann. Vorteilhafterweise kann die Steuereinrichtung die Informationen aus den Korrekturwerten neben einer Basis-Sendeleistung berücksichtigen, so daß nur eine einfache Rechen- und Steueroperation erforderlich ist.

Ein Ausführungsbeispiel der Erfindung wird anhand der beiliegenden Zeichnungen näher erläutert. Dabei zeigen:
- Fig. 1: ein Funk-Kommunikationssystem,
- Fig. 2: eine Funkschnittstelle mit TDD-Übertragungsverfahren,
- Fig. 3: eine Aufteilung der Zeitschlitze auf mehrere Basisstationen,
- Fig. 4: eine Sendeleistungseinstellung für eine Basisstation und eine Teilnehmerstation, und
- Fig. 5: einen schematischen Aufbau einer Funkstation.

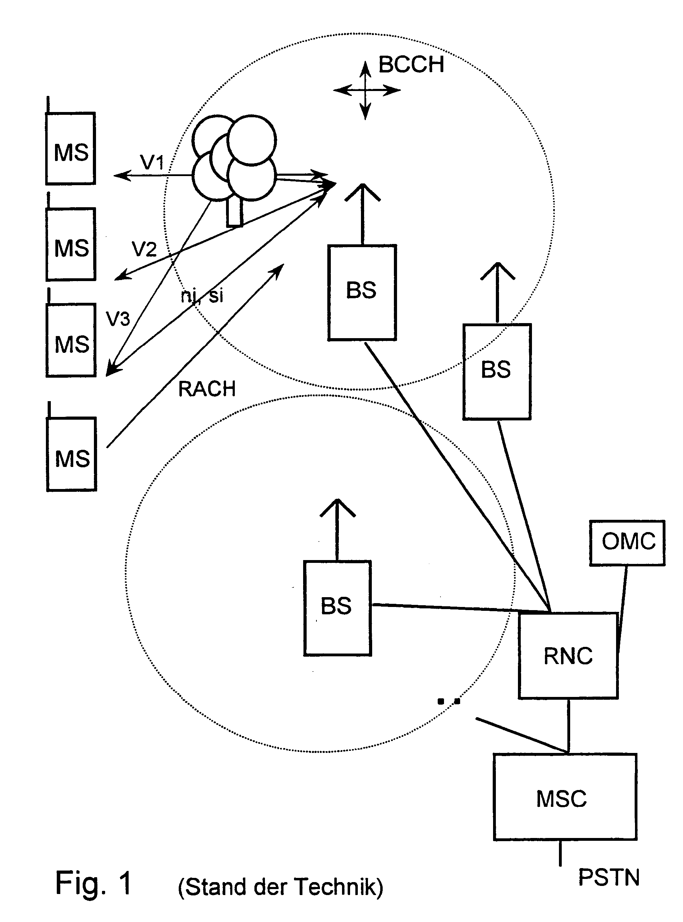

Das in Fig. 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zur Steuerung der Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In FIG. 1 sind beispielhaft Verbindungen V1, V2, V3 zur Übertragung von Nutzinformationen ni und Signalisierungsinformationen si als Punkt-zu-Punkt-Verbindungen zwischen Mobilstationen MS und einer Basisstation BS und ein Organisationskanal BCCH als Punkt-zu-Multipunkt-Verbindung von der Basisstation BS zu den Teilnehmerstationen MS dargestellt. Zudem gibt es einen Zugriffskanal RACH über den eine weitere mobile Station MS eine Anforderung zur Ressourcenzuteilung übermitteln kann. Alternativ zur Ressourcenanforderung sind auch kurze Bestätigungsmeldungen im Zugriffskanal RACH übertragbar.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, insbesondere auf Teilnehmerzugangsnetze mit drahtlosem Teilnehmeranschluß und auf im unlizensierten Frequenzbereich betriebene Basisstationen und Teilnehmerstationen.

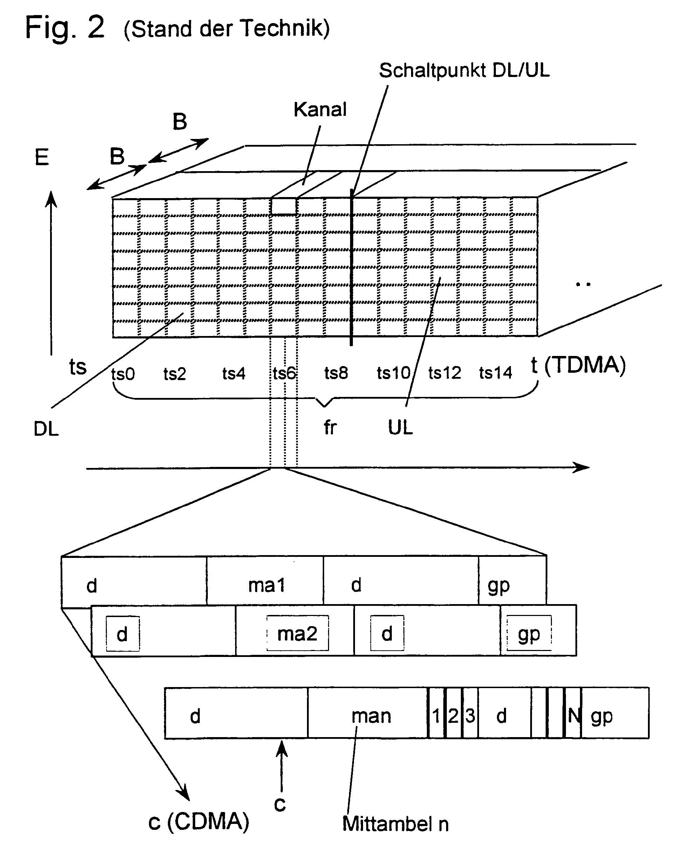

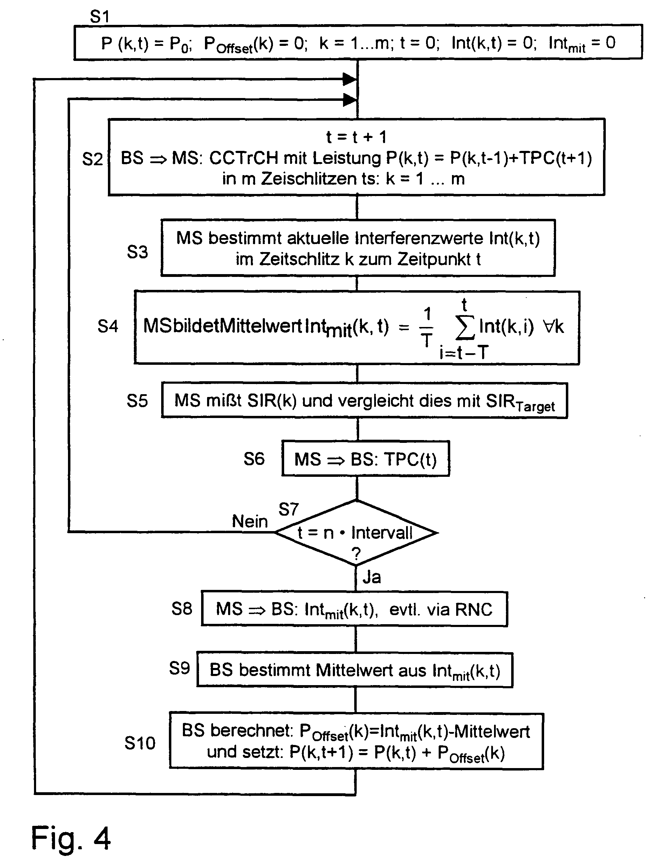

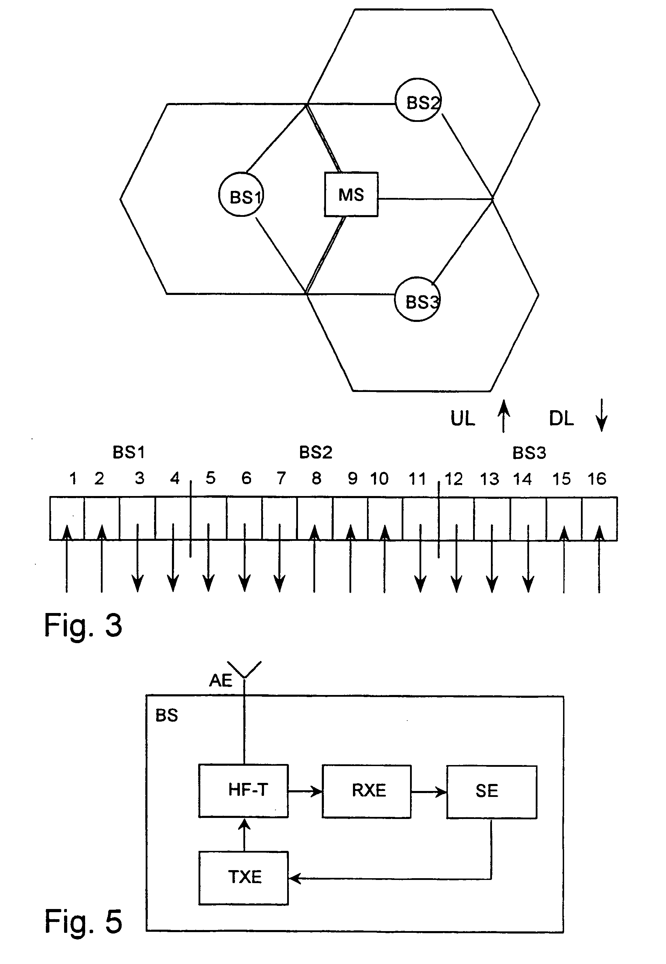

Die Rahmenstruktur einer TDD-Funkübertragung (Time Division Duplex) ist aus Fig. 2 ersichtlich. Innerhalb eines breitbandigen Frequenzbereichs, beispielsweise der Bandbreite B = 5 MHz findet gemäß einer TDMA-Komponente (Time Division Multiple Access) eine Aufteilung in mehrere Zeitschlitze ts gleicher Zeitdauer, beispielsweise 16 Zeitschlitze ts0 bis ts15 pro Rahmen fr statt. Mehrere Rahmen fr bilden einen Multirahmen usw. Somit entsteht eine Kanalstruktur. Es kann dabei auch vorgesehen sein, daß die Zeitschlitze ts eines Rahmens fr nicht nur von einer Basisstation BS genutzt werden, sondern gemäß Fig. 3 jeder Zeitschlitz ts eines Rahmens fr einer Basisstation BS1 bis BS3 zugeteilt ist. In jedem Fall wird ein Teil der Zeitschlitze ts jeweils in Abwärtsrichtung DL und ein Teil der Zeitschlitze in Aufwärtsrichtung UL benutzt.

Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen. Durch die variable Zuteilung der Zeitschlitze ts für Auf- oder Abwärtsrichtung UL, DL können vielfältige asymmetrische Ressourcenzuteilungen und durch die beliebige Zuteilung der Zeitschlitze ts auf die Basisstationen BS1 bis BS3 eine lastabhängige Anpassung der einer Basisstation BS zugeteilten funktechnischen Ressourcen vorgenommen werden.

Die Zuteilung der Zeitschlitze ts erfolgt in der Einrichtung RNC zur Zuteilung von funktechnischen Ressourcen, wobei im Falle benachbarter Basisstationen und einer Zeitclusterung ein Zeitschlitz ts nur einer Basisstation BS1 bis BS3 zugeteilt ist. Die einer Basisstation BS1 zugeteilten Zeitschlitze ts werden dieser durch die Einrichtung RNC signalisiert.

Innerhalb der Zeitschlitze ts werden Informationen mehrerer Verbindungen in Funkblöcken übertragen. Die Daten sind verbindungsindividuell mit einer Feinstruktur, einem Spreizkode c, gespreizt, so daß empfangsseitig beispielsweise n Verbindungen durch diese CDMA-Komponente (CDMA: Code Division Multiple Access) separierbar sind. Die CDMA-Komponente schafft eine variable Kapazitätserweiterung der Funkschnittstelle durch Einstellung von Spreizfaktoren bzw. Vergabe einer variablen Anzahl von Spreizkodes. Es sind kurze Schutzzeiten - die Differenz der Funkblocklänge zur Länge eines Zeitschlitzes ts - vorgesehen, die als Toleranz für die Zeitsynchronisation dienen. Innerhalb der Funkblöcke werden Mittambeln m übertragen, die in die Daten tragenden Signalanteile eingebettet sind oder allein gesendet werden.

Ist ein zu übertragender Informationsblock zu groß, um mit einem Spreizkode und in einem Zeitschlitz übertragen zu werden, so werden mehrere Spreizkodes c in mehreren Zeitschlitzen ts in Form eines Kanals für kodierte zusammengesetzte Daten CCTrCH gebündelt.

Vorteilhaft wäre eine einfache Sendeleistungseinstellung für einzelne Zeitschlitze ts eines Kanals für kodierte zusammengesetzte Daten CCTrCH. Aufgrund von Problemen bei der Codierung und der Zuordnung zu bestimmten Zeitschlitzen ist es jedoch nicht möglich, jeweils eine Sendeleistungs-Kontroll- bzw. TPC-Anweisung (TPC: Transmit Power Control) pro Zeitschlitz ts zu senden.

Es gibt jedoch in jedem Zeitschlitz ts Messungen der Interferenz, wobei die Teilnehmerstation MS1 die Meßwerte (Int) oder Werte, die daraus in einem Algorithmus berechnet werden, über Signalisierungskanäle (z.B. RACH) in größeren Zeitabständen an ihr terrestrisches UMTS-Funknetz UTRAN (UMTS terrestrial radio access network) senden. Dies dient zum Zwecke der dynamische Kanalzuteilung (DCA - Dynamic Channel Allocation). Beim vorliegenden Ausführungsbeispiel kann die Übermittlung von solchen Korrekturwerten entsprechend an die Einrichtung zum Zuteilen funktechnischer Ressourcen RNC erfolgen.

Diese Interferenzwerte können dort vorteilhafterweise dazu verwendet werden, im Sender der Basisstation BS für jeden Zeitschlitz eines Kanals für kodierte zusammengesetzte Daten CCTrCH einen individuellen Leistungs-Offset P_{Offset} einzustellen, mit der die Basisstation Signale aussendet. Dieser Leistungsoffset P_{Offset} führt unabhängig von der Art des Leistungssteuerungs-Algorithmus in der Teilnehmerstation MS zu einem einheitlichen Signal/Interferenz-Verhältnis SIR in allen Zeitschlitzen ts. Dieses Signal/Interferenz-Verhältnis kann dann mit der vorhandenen inneren Schleife der Leistungsregelung einheitlich für alle Zeitschlitze dem Sollwert (SIR target) nachgeregelt werden.

Die Sendeleistungseinstellung für eine Berücksichtigung eines Leistungsoffsets zwischen einzelnen Zeitschlitzen ts wird anhand von Fig. 4 beispielhaft erläutert.

Die Verfahrensschritte S1 bis S10 zeigen in etwa die zeitliche Reihenfolge, in der die einzelnen Verfahrensschritte S1 bis S10 von den beteiligten Funkstationen, der Basisstation BS und der Mobilstation MS1, durchzuführen sind. Die Informationsübertragung zur Mobilstation MS erfolgt in Form eines Kanals für kodierte zusammengesetzte Daten CCTrCH in den m Zeitschlitzen k = 1...m. Diese müssen nicht aufeinanderfolgend sein. In Fig. 4 wird die Sendeleistungseinstellung für die Abwärtsverbindungs-Übertragungsrichtungen DL nur einer Verbindung gezeigt. Die Basisstation BS ist üblicherweise in mehrere Verbindungen involviert, so daß sich der gleiche Verfahrensablauf für die übrigen Verbindungen wiederholt.

Im Schritt S1 findet eine Initialisierung der Basisstation und der mit dieser in Kommunikation tretenden Mobilstation MS1 statt. Dabei wird die Leistung P(k), mit der die Basisstation BS Signale zur Teilnehmerstation MS1 in den Zeitschlitzen k senden soll, auf den einheitlichen Wert Po gesetzt. Weiterhin wird ein Zähler t für die zeitliche Nummerierung der Rahmen auf Null gesetzt, wobei ein solcher Zähler bei einer entsprechenden Programmierung auch entfallen kann. Ebenfalls auf Null gesetzt wird die Arbeitsvariable Int(k,t), d.h. die entsprechenden Hardware-Speicherbereiche, für einen im k-ten Zeitschlitz ts zum Zeitpunkt t gemessenen Interferenzwert Int(k,t). Auf Null gesetzt wird auch eine Arbeitsvariable P_{Offset} bzw. der dieser zugeordnete Speicherbereich zur Speicherung eines Leistungsoffsets P_{Offset}.

In einem zweiten Schritt S2 wird die Zeitbasis inkrementiert und die Basisstation BS sendet Daten und/oder Signale mit der Leistung P(k,t) zur mobilen Teilnehmerstation MS1. Das Senden erfolgt z.B. aufgrund von Reflexionen an Hindernissen im Ausbreitungsweg der Funkwellen über verschiedene Wege V1 - V3. Die Teilnehmerstation MS1 empfängt die gesendete Information daher über eine Vielzahl von Wegen, wobei sich die Informationen interferierend überlagern. Interferenzen entstehen insbesondere auch durch den Empfang von Signalen fremder Basisstationen.

Beim oder nach dem Empfangen dieser Signale bzw. Informationen bestimmt die Teilnehmerstation MS1, wie vorstehend erörtert, in einem Schritt S3 einen momentanen Interferenzwert Int(k,t). Diese Interferenzwerte können auch in Zeitschlitzen ermittelt werden, in denen keine Daten zur Teilnehmerstation MS1, sondern z. B. zu einer anderen Teilnehmerstation MS2 übertragen wird.

In einem Schritt S4 berechnet die mobile Teilnehmerstation MS1 individuell für jeden Zeitschlitz einen zeitlichen gleitenden Mittelwert über den Zeitraum T der Interferenzwerte Int(k,t). Sowohl der Zeitraum T als auch die Art der Mittelwertbildung können auf mehrere verschiedene Arten erfolgen.

Im Schritt S5 ermittelt die Teilnehmerstation MS1 für jeden Zeitschlitz das Signal-zu-Interferenz-Verhältnis S/I(k), vergleicht diese mit dem Sollwert (SIR target) und berechnet ein zeitschlitzunabhängiges TPC-Kommando TPC(t), das im Schritt S6 an die Basistation BS1 übermittelt wird.

Alternativ kann auch eine Vielzahl von aktuellen Interferenzwerten Intₖ vor einer Verarbeitung in diesem Algorithmus zwischengespeichert oder zur Verarbeitung an eine andere Einrichtung im Netz übertragen werden, z.B. an die Basisstation BS.

Im Schritt S7 erfolgt eine Abfrage, ob der Zählerwert t der Zeitscheibe einem vorgegeben Vielfachen y mit z.B. y = 1000 einer natürlichen Zahl n entspricht.

Falls "Ja" gilt, dann sendet die Teilnehmerstation MS1 die zeitschlitzbezogenen gemittelten Interferenzwerte über einen geeigneten Kanal zur Basisstation BS oder der Einrichtung zum Zuweisen funktechnischer Ressourcen RNC (Schritt S8). Dort wird aus den zu den Zeitschlitzen eines Kanals für kodierte zusammengesetzte Daten CCTrCH gehörigen gemittelten Interferenzwerten ein Mittelwert gebildet. Alternativ kann auch eine andere Richtgröße, z. B der größte oder kleinste Interferenzwert ermittelt werden.

Auf der Basis dieses Richtwertes wird für jeden Zeitschlitz ts eines Kanals für kodierte zusammengesetzte Daten CCTrCH ein individueller Leistungsoffset P_{offset} gebildet und entsprechend bei der zukünftigen Sendeleistung P(k,t+1) berücksichtigt

Falls "Nein" gilt, so wird mit Schritt S2 fortgefahren.

Das vorstehende Verfahren ist allgemein beim Austausch von Aussendungen, insbesondere Signalen und Daten, zwischen zwei kommunizierenden Stationen verwendbar und dabei nicht auf das beispielhaft aufgeführte Funk-Kommunikationssystem beschränkt. Die kommunizierenden Stationen müssen auch nicht zwingend eine Basisstation und eine mobile Teilnehmerstation sein.

Für eine Funkstation, die hier als Basisstation ES ausgebildet ist, gilt ähnliches für die Teilnehmerstation MS. Entsprechend der Darstellung in Fig. 5 nimmt die Funkstation Empfangssignale aller Verbindungen über eine Antenneneinrichtung AE auf. Die Empfangssignale werden in einem HF-Teil verstärkt, gefiltert und einer Empfangseinrichtung RXE zugeführt, in der eine Digitalisierung und eine weitere Signalauswertung erfolgt.

Eine Steuereinrichtung SE entnimmt den Signalen Interferenzwerte, Korrekturwerte und dergleichen und bestimmt auch die Tendenz bezüglich der Empfangsleistung aus den jeweils zu einer Teilnehmerstation MS1 gehörigen Empfangssignalen. Weiterhin bestimmt die Steuereinrichtung SE die Korrekturwerte für die kommunizierende Station und veranlaßt die Übertragung der Korrekturwerte über die Sendeeinrichtung TXE und die Antenneneinrichtung AE.

## Patentansprüche

1. Verfahren zur Sendeleistungsregelung in einem Funk-Kommunikationssystem, bei dem
- zumindest zwei Stationen (BS, MS) über eine Funkschnittstelle miteinander verbunden sind, wobei die Funkschnittstelle nach einem TDD-Übertragungsverfahren mit mehreren, unterschiedlichen Verbindungen zuweisbaren Zeitschlitzen (ts) organisiert ist,
- von einer zweiten Station (MS, BS) Aussendungen (V1 - V3, RACH, BCCH) einer ersten Station (BS, MS) in mehreren Zeitschlitzen (ts) empfangen werden,
- aus den empfangenen Aussendungen Interferenzwerte (Int) der Zeitschlitze (ts) bestimmt werden,
**dadurch gekennzeichnet, daß**
- von der zweiten Station (MS, BS) aus den bestimmten zeitschlitzindividuellen Interferenzwerten (Int) ein zeitschlitzunabhängiges Sendeleistungskommando (TPC) bestimmt und zu der ersten Station (BS, MS) übermittelt wird,
- aus den bestimmten zeitschlitzindividuellen Interferenzwerte (Int) ein Mittelwert oder Richtwert gebildet wird, und
- aus dem Mittelwert oder Richtwert und den zeitschlitzindividuellen Interferenzwerten zeitschlitzindividuelle Leistungsoffset-Werte (P_{offset}) gebildet und in der ersten Station (BS, MS) für die Sendeleistungseinstellung nachfolgender Aussendungen (V1 - V3, RACH, BCCH) in den Zeitschlitzen (ts) zu der zweiten Station (MS, BS) berücksichtigt werden.

2. Verfahren nach Anspruch 1,
**dadurch gekennzeichnet,**
**daß** für jeden einzelnen Zeitschlitz (ts) mit bestimmbarer Interferenz jeweils der Interferenzwert (Int) bestimmt und nach Übertragung zur ersten Station (BS) für die Sendeleistungseinstellung folgender Aussendungen berücksichtigt wird.

3. Verfahren nach Anspruch 1 oder 2,
**dadurch gekennzeichnet,**
**daß** zumindest zwei Interferenzwerte (Int) miteinander verglichen werden und das Vergleichsergebnis bei der Sendeleistungseinstellung berücksichtigt wird, insbesondere eine Extrapolation oder Abschätzung zukünftiger Interferenzen erfolgt.

4. Verfahren nach einem der vorherigen Ansprüche,
**dadurch gekennzeichnet,**
**daß** im Funk-Kommunikationssystem mittels der Interferenzwerte (Int) Sendeleistungswerte (P) insbesondere individuell für jeden Zeitschlitz (ts) bestimmt werden, die bei der Sendeleistungseinstellung berücksichtigt werden.

5. Verfahren nach einem der vorherigen Ansprüche,
**dadurch gekennzeichnet,**
**daß** die Stationen (MS, MS1, BS) Funkstationen, insbesondere Basisstationen (BS) und mobile Teilnehmerstationen (MS, MS1) sind.

6. Verfahren nach einem der vorherigen Ansprüche,
**dadurch gekennzeichnet,**
**daß** die Aussendungen der zweiten Station (MS, BS) in Verkehrskanälen (CCTrCH) gesendet werden.

7. Funkstation für ein Funk-Kommunikationssystem, mit
- einer Empfangseinrichtung (RXE) zum Empfangen von Signalen von zumindest einer weiteren Funkstation (MS), wobei ein Teil der empfangenen Signale zeitschlitzindividuelle Interferenzwerte (Int), die von der weiteren Funkstation (MS) aus empfangenen Aussendungen der Funkstation (BS) bestimmt wurden, sowie ein zeitschlitzunabhängiges Sendeleistungskommando. (TPC) enthält, und
- einer Sendeeinrichtung (TX) zum Senden von Signalen über eine Funkschnittstelle zu zumindest der weiteren Funkstation (MS), wobei die Funkschnittstelle nach einem TDD-Übertragungsverfahren mit mehreren, unterschiedlichen Verbindungen zuweisbaren Zeitschlitzen (ts) organisiert ist,
**gekennzeichnet durch**
- eine Steuereinrichtung (SE) zum Bilden eines Mittelwertes oder Richtwertes aus den bestimmten zeitschlitzindividuellen Interferenzwerte (Int), zum Bilden von zeitschlitzindividuellen Leistungsoffset-Werten (P_{offset}) aus dem Mittelwert oder Richtwert und den zeitschlitzindividuellen Interferenzwerten, und zum zeitschlitzindividuellen Einstellen der Sendeleistung für nachfolgende Aussendungen (V1 - V3, RACH, BCCH) in den Zeitschlitzen (ts) zu der weiteren Station (MS) unter Berücksichtigung der gebildeten zeitschlitzindividuellen Leistungsoffset-Werte (P_{offset}) .

8. Funkstation nach Anspruch 7,
**dadurch gekennzeichnet,**
**daß** die Steuereinrichtung (SE) eine Nachsteuerungseinrichtung aufweist, welche auf den empfangenen Interferenzwerten (Int) basierende Korrekturwerte (P_{Offset}) bei der Sendeleistungseinstellung als Abweichung von einer Basis-Leistung (P) berücksichtigt.

9. Funkstation nach Anspruch 7 oder 8,
die als eine Basisstation (BS) eines Funk-Kommunikationssystems ausgestaltet ist.

## Claims

1. Method for transmit power control in a radio communication system, wherein
- at least two stations (BS, MS) are connected to one another via a radio interface, the radio interface being organised according to a TDD transmission method with a plurality of timeslots (ts) which can be allocated to different connections,
- transmissions (V1 - V3, RACH, BCCH) of a first station (BS, MS) are received by a second station (MS, BS) in a plurality of timeslots (ts),
- interference values (Int) of the timeslots (ts) are determined from the received transmissions,
**characterised in that**
- a timeslot-independent transmit power command (TPC) is determined by the second station (MS, BS) from the determined timeslot-individual interference values (Int) and transmitted to the first station (MS, BS),
- an average value or reference value is formed from the determined timeslot-individual interference values (Int), and
- timeslot-individual power offset values (P_{Offset}) are formed from the average value or reference value and the timeslot-individual interference values (Int) and taken into account in the first station (BS, MS) for the transmit power adjustment of subsequent transmissions (V1 - V3, RACH, BCCH) in the timeslots (ts) to the second station (MS, BS).

2. Method according to claim 1,
**characterised in that**
for each individual timeslot (ts) with determinable interference the interference value (Int) is determined in each case and following transmission to the first station (BS) is taken into account for the transmit power adjustment of subsequent transmissions.

3. Method according to claim 1 or 2,
**characterised in that** at least two interference values (Int) are compared with each other and the result of the comparison is taken into account in the transmit power setting, in particular an extrapolation or estimation of future interferences being performed.

4. Method according to one of the preceding claims,
**characterised in that** transmit power values (P) are determined in the radio communication system, in particular individually for each timeslot (ts), by means of the interference values (Int), which transmit power values (P) are taken into account in the transmit power setting.

5. Method according to one of the preceding claims,
**characterised in that**
the stations (MS, MS1, BS) are radio stations, in particular base stations (BS) and mobile subscriber stations (MS, MS1).

6. Method according to one of the preceding claims,
**characterised in that** the transmissions of the second station (MS, BS) are sent in traffic channels (CCTrCH).

7. Radio station for a radio communication system, comprising
- a receiver equipment (RXE) for receiving signals from at least one further radio station (MS), some of the received signals containing timeslot-individual interference values (Int) determined by said further radio station (MS) from received transmissions of the radio station (BS) as well as a timeslot-independent transmit power command (TPC), and
- a transmitter equipment (TX) for sending signals via a radio interface to at least the further radio station (MS), the radio interface being organised according to a TDD transmission method with a plurality of timeslots (ts) which can be allocated to different connections,
**characterised by**
- a control device (SE) for forming an average value or reference value from the determined timeslot-individual interference values (Int), for forming timeslot-individual power offset values (P_{Offset}) from the average value or reference value and the timeslot-individual interference values, and for timeslot-individual adjustment of the transmit power for subsequent transmissions (V1 - V3, RACH, BCCH) in the timeslots (ts) to the further station (MS) taking the formed timeslot-individual power offset values (P_{Offset}) into account.

8. Radio station according to claim 7,
**characterised in that**
the control device (SE) has a correction device which takes correction values (P_{Offset}) based on the received interference values (Int) into account in the transmit power adjustment as a deviation from a base power (P).

9. Radio station according to claim 7 or 8,
which is embodied as a base station (BS) of a radio communication system.

## Revendications

1. Procédé de régulation de puissance d'émission dans un système de radiocommunication, dans lequel
- au moins deux stations (BS, MS) sont raccordées entre elles par l'intermédiaire d'une interface radio, l'interface radio étant organisée selon un procédé de transmission TDD, avec plusieurs créneaux temporels (ts) attribuables à différentes connexions,
- des émissions (V1 - V3, RACH, BCCH) d'une première station (BS, MS) sont reçues en plusieurs créneaux temporels (ts) par une deuxième station (MS, BS),
- des valeurs d'interférence (Int) sont déterminées à partir des émissions reçues,
**caractérisé en ce qu'**
- une commande de puissance d'émission (TPC), indépendante des créneaux temporels, est déterminée par la deuxième station (MS, BS) à partir des valeurs d'interférence (Int) individuelles aux créneaux temporels et **en ce qu'**elle est transmise à la première station (BS, MS),
- une valeur moyenne ou valeur indicative est formée à partir des valeurs d'interférence (Int) individuelles aux créneaux temporels, et
- des valeurs d'offset de puissance (P_{offset}), individuelles aux créneaux temporels, sont formées à partir de la valeur moyenne ou valeur indicative et des valeurs d'interférence individuelles aux créneaux temporels et prises en considération dans la première station (BS, MS) pour la régulation de la puissance d'émission d'émissions suivantes (V1 - V3, RACH, BCCH) dans les créneaux temporels (ts) vers la deuxième station (MS, BS).

2. Procédé selon la revendication 1,
**caractérisé en ce**
**que** la valeur d'interférence (Int) est respectivement déterminée pour chacun des créneaux temporels (ts) à interférence déterminable et en ce qu'elle est prise en considération après la transmission à la première station (BS) pour la régulation de la puissance d'émission d'émissions suivantes.

3. Procédé selon la revendication 1 ou 2,
**caractérisé en ce**
en ce qu'au moins deux valeurs d'interférence (Int) sont comparées entre elles et en ce que le résultat de la comparaison est pris en compte lors de la régulation de la puissance d'émission, notamment en ce qu'une extrapolation ou évaluation d'interférences futures est réalisée.

4. Procédé selon l'une quelconque des revendications précédentes,
**caractérisé en ce**
**que** des valeurs de puissance d'émission (P) sont déterminées, notamment de manière individuelle pour chaque créneau temporel (ts), dans le système de radiocommunication au moyen des valeurs d'interférence (Int), ces valeurs de puissance d'émission étant prises en compte lors de la régulation de la puissance d'émission.

5. Procédé selon l'une quelconque des revendications précédentes,
**caractérisé en ce**
**que** les stations (MS, MS1, BS) sont des stations radio, notamment des stations de base (BS) et des stations d'abonné mobiles (MS, MS1).

6. Procédé selon l'une quelconque des revendications précédentes,
**caractérisé en ce**
**que** les émission de la deuxième station (MS, BS) sont émises dans des canaux de trafic (CCTrCH).

7. Station radio pour un système de radiocommunication, comprenant
- un dispositif de réception (RXE) destiné à recevoir des signaux d'au moins une autre station radio (MS), une partie des signaux reçus contenant des valeurs d'interférence (Int), individuelles aux créneaux temporels, qui ont été déterminées par l'autre station radio (BS) à partir d'émissions reçues de la station radio (BS), ainsi qu'une commande de puissance d'émission (TCP) indépendante du créneau temporel, et
- un dispositif d'émission (TX) destiné à émettre des signaux à au moins l'autre station radio (MS) par l'intermédiaire d'une interface radio, l'interface radio étant organisée selon un procédé de transmission TDD, avec plusieurs créneaux temporels (ts) attribuables à différentes connexions,
**caractérisée par**
- un dispositif de commande (SE) destiné à former une valeur moyenne ou valeur indicatrice à partir des valeurs d'interférence (Int) déterminées, individuelles aux créneaux temporels, et destiné à former des valeurs d'offset de puissance (P_{offset}), individuelles aux créneaux temporels, à partir de la valeur moyenne ou valeur indicative et des valeurs d'interférence individuelles aux créneaux temporels, et destiné à la régulation, individuelle au créneau temporel, de la puissance d'émission pour des émissions suivantes (V1 - V3, RACH, BCCH) dans les créneaux temporels (ts) vers l'autre station (MS), en tenant compte des valeurs d'offset de puissance (P_{offset}) formées, individuelles aux créneaux temporels.

8. Station radio selon la revendication 7,
**caractérisée en ce**
**que** le dispositif de commande (SE) présente un dispositif de commande automatique, lequel tient compte de valeurs de correction (P_{offset}) basées sur les valeurs d'interférence reçues (Int), lors de la régulation de la puissance d'émission, en tant qu'écart par rapport à une puissance de base (P).

9. Station radio selon la revendication 7 ou 8,
qui est conçue comme une station de base (BS) d'un système de radiocommunication.
